# EUROPÄISCHE PATENTSCHRIFT

(11) **EP 1 790 207 B1**
(45) Veröffentlichungstag und Bekanntmachung des Hinweises auf die Patenterteilung: **25.11.2009**
(21) Anmeldenummer: 06120088.7
(22) Anmeldetag: 05.09.2006
(51) Int. Cl.: A01F 12/40

(54) **Erntemaschine**
Harvesting machine
Moissonneuse

(30) Priorität: 25.11.2005 DE 102005056553
(43) Veröffentlichungstag der Anmeldung: 30.05.2007
(73) Patentinhaber: CLAAS Selbstfahrende Erntemaschinen GmbH, 33428 Harsewinkel (DE)
(72) Erfinder: Diekhans, Dr. Norbert, 33335 Gütersloh (DE)

(56) Entgegenhaltungen:
- EP-A1- 0 732 045
- EP-A2- 1 332 659
- EP-A2- 1 514 466
- DE-A1- 10 134 141

## Beschreibung

Die Erfindung betrifft eine Erntemaschine mit einer Verteileinrichtung für einen aus der Erntemaschine austretenden Gutstrom.

Aus der DE 101 34 141 ist ein Mähdrescher mit einer Verteilvorrichtung zur Verteilung des aus dem Mähdrescher austretenden Häckselgutes auf Schneidwerksbreite bekannt. Die Verteileinrichtung weist Leitbleche auf, die über einen Motor verstellt werden, so dass die Auswurfrichtung so einstellbar ist, dass kein Material in den stehenden Bestand geworfen wird. Der Motor ist mit einer Seitenerkennungseinrichtung verbunden, die anhand der von einer GPS-basierten Positionsbestimmungseinrichtung ermittelten Position und Fahrtrichtung der Erntemaschine auf dem Feld und der in einer Speichereinheit abgelegten Schlagkartei die Lage des abgeernteten Teils und/oder noch nicht abgeernteten Teils des Feldes zur Erntemaschine ermittelt und den Motor abhängig von dieser berechneten Lage steuert.

Nachteilig bei dieser bekannten Verteilvorrichtung ist, dass sie nur arbeitet, wenn die Positionsbestimmungseinrichtung die Signal des GPS-Systems empfängt beziehungsweise Signale vom GPS-System gesendet werden und das die Erntemaschine in einer vorgegebenen Fahrtrichtung das Feld befahren muss, da ansonsten die Seite des Bestand sowie des abgeernteten Feldes zur Erntemaschine vertauscht werden.

Der Erfindung liegt daher die Aufgabe zugrunde, die Nachteile des Standes der Technik zu vermeiden und insbesondere die Verteilbreite der Verteileinrichtung zu variieren und dabei die Lage der Bestandskante zu berücksichtigen.

Diese Aufgabe wird erfindungsgemäß durch die kennzeichnenden Merkmale des Anspruchs 1 gelöst Weitere vorteilhafte Wirkungen des Erfindungsgegenstandes ergeben sich aus den Unteransprüchen.

Indern die Regelung der Verteilbreite der Verteileinrichtung abhängig von den Entfernungssignalen der Karttenerkennungseinrichtung erfolgt, kann die Verteilbreite so verstellt werden, dass der aus der Verteileinrichtung austretende Gutstrom nicht in den Bestand geworfen wird.

Vorteilhafterweise ist die Kantenerkennungseinrichtung eine Ortungsvorrichtung, die eine Bestandskante berührungslos detektiert, so dass die Kantenerkennungseinrichtung verschleißarm ausgeführt ist.

Damit die Entfernungssignale rechnerunterstützt ausgewertet werden können, ist die Ortungsvorrichtung vorteilhafterweise mit einer Auswerteeinheit verbunden ist, wobei die Entfernungssignale an die Auswerteeinheit übermittelt werden.

In vorteilhafter Ausgestaltung der Erfindung ermittelt die Auswerteeinheit mit den Entfemungssignalen, ob der Bestand linksseitig oder rechtsseitig von der Bestandskante angeordnet ist und generiert ein Linkssignal, wenn der Bestand linksseitig der Bestandkante angeordnet ist und ein Rechtssignal wenn der Bestand rechtsseitig von der Bestandskante angeordnet ist, so dass die Lage des Bestandes automatisch ohne die Hilfe des Fahrers ermittelt wird, was eine Entlastung für den Fahrer bedeutet.

Die Auswerteeinheit ist vorteilhafterweise mit einer Steuereinheit verbunden, wobei die Auswerteeinheit das Linkssignal und/oder das Rechtssignal an die Steuereinheit übermittelt so dass die Steuereinheit ständig Informationen über die Lage des Bestandes zur Bestandskante erhält

Eine vorteilhafte Ausgestaltung der Erfindung ergibt sich dadurch, wenn in der Steuereinheit ein erster Verstellbereich zur Regelung der Verteilbreite und ein zweiter Verstellbereich zur Regelung der Verteilbreite gespeichert sind und die Steuereinheit abhängig vom Linkssignal den ersten Verstellbereich festlegt und/oder abhängig vom Rechtssignal den zweiten Verstellbereich festlegt, so dass auch der Verstellbereich ohne Zutun des Fahrers automatisch ausgewählt wird.

Vorteilhafterweise generiert die Steuereinheit in Abhängigkeit vom festgelegten Verstellbereich Steuersignale, wobei mit den Steuersignalen die Festlegung der Anschläge oder der Schwenkwinkel der Gutleitelemefite erfolgt so dass eine Anpassung der Verteilbreite selbsttätig erfolgt.

In einer vorteilhaften Ausgestaltung der Erfindung ist die Erntemaschine ein Mähdrescher und die Verteileinrichtung ein Spreu- und/oder Häckselgutverteiler.

In vorteilhafter Weiterbildung der Erfindung ist die Verteileinrichtung eine Verteilhaube mit zumindest einem verschwenkbaren Leitblech, wobei das von der Steuereinheit generierte Steuersignal den Verschwenkwinkel des Leitblechs begrenzt, so dass der aus der Verteilhaube austretende Gutstrom nicht in den Bestand geworfen wird,

In vorteilhafter Weiterbildung der Erfindung weist die Verteileinrichtung wenigstens ein Wurfgebläse mit einer verschwenkbaren Abrisskante auf, wobei das von der Steuereinheit generierte Steuersignal die Anschläge der Abrisskante begrenzt, damit der aus dem Wurfgebläse austretende Gutstrom nicht in den Bestand geworfen wird.

In vorteilhafter Weiterbildung der Erfindung ist die Verteileinrichtung ein Radialgebläse mit wenigstens einem oszillierenden Austragkanal, wobei das von der Steuereinheit generierte Steuersignal die Anschläge des Austragkanals begrenzt, so dass der aus dem Radialgebläse austretende Gutstrom nicht in den Bestand geworfen wird.

Vorteilhafterweise weist die Erntemaschine wenigstens zwei Ortungsvorrichtungen aufweist, die jeweils Entfernungssignale generieren, damit der Mähdrescher nebeneinanderliegende Spuren auf dem Feld in entgegengesetzten Fahrtrichtungen abernten kann.

In vorteilhafter Weiterbildung der Erfindung sind die Ortungsvorrichtungen mit der Auswerteeinheit verbunden und die Ortungsvorrichtungen übermitteln die Entfernungssignale an die Steuereinheit so dass die Auswerteeinheit anhand der Entfernungssignale ermittelt, welche Ortungsvorrichtung eine Bestandkante erfasst.

Vorteilhafterweise ist die Auswerteeinheit mit einem Bedienelement verbunden, über das ein Bediener auswählt, mit weichen Entferntingssignale der Verstellbereich des Gutleitelements festgelegt wird, so dass der Bediener für den Fall, dass beide Ortungsvorrichtungen eine Bestandskante erfassen, festlegt, welche Bestandskante für die Regelung der Verteilbreite relevant ist

Vorteilhafterweise wird die Ortungsvorrichtung von einer Reflex-Ortungsvorrichtung gebildet, deren Abtastbereich vorausschauend auf die Bestandskante gerichtet werden kann, so dass die Bestandkante frühzeitig erkannt wird.

Die Reflex-Ortungsvorrichtung arbeitet vorteilhafterweise Laser-, Ultraschall- oder Infrarot-basiert, so dass die Entfernungen zwischen der Ortungsvorrichtung und dem abgetasteten Bereich online gemessen werden können.

In einer alternativen Ausführung der Erfindung ist die Kantenerkennungselnrichtung ein Taster, der bei Berührung mit der Bestandskante ausgelenkt wird. Der Taster ist eine im Vergleich zur Reflex-Ortungsvorrichtung einfache mechanische Apparatur mit ausreichender Genauigkeit.

Weitere vorteilhafte Ausgestaltungen sind Gegenstand weiterer Unteransprüche und werden nachfolgend an Hand der in mehrerer Figuren dargestellten Ausführungsbeispiele näher erläutert.

Es zeigen:

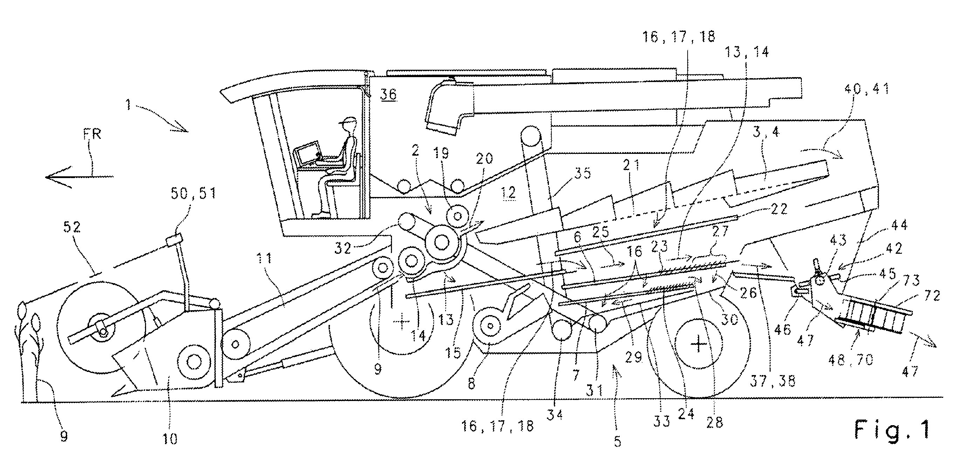

Fig. 1 eine schematische Seitenansicht eines Mähdreschers mit einer erfindungsgemäßen Verteileinrichtung
Fig.1 zeigt eine schematische Draufsicht auf einen Mähdrescher gemäß der Fig. 1,
Fig.3 zeigt eine Draufsicht auf eine als Radialgebläse ausgeführte, erfindungsgemäße Verteileinrichtung,
Fig.4 zeigt eine Draufsicht auf eine als Verteil haube ausgeführte, erfindungsgemäßen Verteileinrichtung.

Fig.1 zeigt die Seitenansicht einer als Mähdrescher 1 ausgeführten Erntemaschine mit einem an sich bekannten und daher hier nicht näher beschriebenen Dreschwerk 2 und einer diesem nachgeordneten Schüttlerhorde 3 als Abscheideorgan 4. Unterhalb der Schüttlerhorde 3 befindet sich eine Reinigungseinrichtung 5, bestehend aus zwei übereinander angeordneten Sieben 6, 7 und einem Reinigungsgebläse 8. Die Erfindung ist aber ausdrücklich nicht auf derartig ausgeführte Mähdreschertypen beschränkt. Im vorderen Bereich ist an dem Mähdrescher 1 ein Schneidwerk 10 angeordnet, mit dem das Erntegut 9 geschnitten und aufgenommen wird. Das Schneidwerk 10 führt das Erntegut 9 einem Schrägförderer 11 zu, der frontseitig am Mähdrescher 1 angeordnet ist. Der Schrägförderer 4 übergibt das Erntegut 9 an das im Maschinengehause 12 angeordnete Dreschwerk 2. Das Dreschwerk 2 bearbeitet das Erntegut 9 intensiv, so dass die Körner aus den Früchten des Ernteguts 2 herausgelöst werden. Ein überwiegenden aus Körnern bestehendes Korn-Spreu-Gemisch 13 wird an dem Dresch- und Abscheidekorb 14 des Dreschwerks 2 abgeschieden und gelangt über einen Vorbereitungsboden 15 zu der Reinigungseinrichtung 5, um die Körner 16 von den Nichtkornbestandteilen, das heißt von Halm- 17 und Spreuteilen 18 zu trennen. Im rückwärtigen Bereich ist dem Dreschwerk 2 eine rotierende Wendetrommel 19 zugeordnet, die den aus dem Dreschwerk 2 austretenden, im wesentlichen aus ausgedroschenen Halmen bestehenden Gutstrom 20 annimmt und der Schüttlerhorde 3 zuführt, die den Gutstrom 20 in den rückwärtigen Bereich des Mähdreschers 1 fördert.
Dabei werden die noch im Gutstrom 20 befindlichen Körner 16 sowie eventuell Kurzstroh 17 und Spreu 18 abgetrennt, indem sie durch die mit Sieböffnungen 21 versehene Schüttlerhorde 3 hindurch auf einen Rücklaufboden 22 fallen, Der Rücklaufboden 22 transportiert Körner 16, Kurzstroh 17 und Spreu 18 zum Vorbereitungsboden 15.
Die Körner 16, das Kurzstroh 17 und die Spreu 18 gelangen schließlich ebenfalls über den Vorbereitungsboden 15 in die Reinigungseinrichtung 5, in welcher die Körner 16 vom Kurzstroh 17 und von der Spreu 18 getrennt werden.
Dies erfolgt in der Weise, dass durch die Sieböffnungen 23, 24 im Obersieb 6 und im Untersieb 7 mittels des Gebläses 8 ein Luftstrom hindurchgefördert wird, welcher das über die Siebe 6, 7 in den hinteren Bereich des Mähdreschers 1 geführte Erntegut 25 auflockert und für das Heraustrennen der spezifisch leichteren Spreu- und Kurzstrohanteile 17, 18 sorgt, während die schweren Erntegutkörner 16 durch die Sieböffnungen 23, 24 fallen.
Ein Siebdurchgang 26, der im Überkehrbereich 27 durch das Obersieb 6 hindurchfällt und ein Siebüberlauf 28 am Ende des Untersiebs 7, enthält in der Regel schwerere Teilchen, d. h. unausgedroschene Ähren. Der Siebdurchgang 26 zusammen mit dem Siebüberlauf 28 wird nachfolgend als sogenannte Überkehrerntegutmenge 29 bezeichnet. Die Überkehrerntegutmenge 29 fällt auf einen schräg verlaufenden Auffangboden 30 unterhalb der Reinigungseinrichtung 5 und gleitet in eine Ahrenförderschnecke 31, Die Ahrenförderschnecke 31 fördert die überkehrerntegutmenge 29 in einen Ährenelevator 32, der sie erneut dem Dreschwerk 2 zuführt.
Die Körner 16, welche durch beide Siebe 6, 7 der Reinigungsvorrichtung 5 gelangt sind, fallen auf einen weiteren schräg verlaufenden Auffang- und Führungsboden 33 und gleiten in eine Kornförderschnecke 34, die die Körner 16 einem Kornelevator 35 zuführt. Der Kornelevator 35 fördert die Körner 16 in den Korntank 36.
Das Stroh 40 sowie ein bestimmter Prozentsatz an Verlustkörnern 41 wandern über die Schüttlerhorde 3 zum hinteren Ende des Mähdreschers 1 und fallen am Ende der Schüttlerhorde 3 in einen Strohhäcksler 42. Der Strohhäcksler 42 weist eine rotierende Häckslerwelle 43 auf, die in einem Häckslergehäuse 44 gelagert ist. Die Häckslerwelle 44 ist mit beweglichen Messern 45 besetzt, die mit im Häckslergehäuse 44 fest angeordneten Gegenmessern 46 kämmen. Mit diesen Messern 45, 46 wird das Stroh 40 zu Häckselgut zerkleinert und beschleunigt.
Der größtenteils aus Spreu 37 bestehende Siebüberlauf 38, der nicht durch das Obersieb 6 hindurch fällt, gelangt über das Obersieb 6 in den hinteren Bereich des Mähdreschers 1 und wird ebenfalls dem Strohhäcksler 42 zugeführt.
Der aus dem Strohhäcksler 42 austretende, die Spreu und das Häckselgut enthaltene Gutstrom 47 wird einer an späterer Stelle näher erläuterten, nachgeordneten Verteileinrichtung 48 radial zugeführt, die den Gutstrom 47 auf dem Feld verteilt. Damit die Verteileinrichtung 48 den aus dem Mähdrescher 1 austretende Gutstrom 47 nicht in den stehenden Bestand auf dem Feld fördert, ist erfindungsgemäß vorgesehen, dass eine später noch näher zu beschreibende Kantenerkennungsesnrtchtung 50 vorgesehen ist, wobei mit den von dieser Kantenerkennungsehnchtung 50 generierten Entfernungssignalen die Verteilbreite der Verteileinrichtung 48 regelbar ist.
Es liegt im Rahmen der Erfindung, dass dem Mähdrescher 1 mehrere Verteileinrichtungen 48 zugeordnet sein können, wobei beispielsweise eine Verteilvorrichtung 48 das aus dem Strohhäcksler 42 austretende Häckselgut 47 und eine weitere Verteileinrichtung die Spreu 37 separat auf dem Feld verteilt, wobei die Verteilbreiten der Verteileinrichtungen 48 erfindungsgemäß mit den von der Kantenerkennungseinrichtung 50 generierten Entfernungssignalen regelbar sind.
Oberhalb des Erntegutes 9 ist die als Ortungsvorrichtung 51 ausgeführte Kantenerkennungseinnchtung 50 an dem Schneidwerk 10 angeordnet, die mit einem in Fahrtrichtung FR des Mähdreschers 1 vorrausschauenden, zum Erntegut 9 gerichteten Abtaststrahl 52 den Bereich vor dem Schneidwerk 10 abtastet. Als Ortungsvorrichtung 51 kann jede dem Fachmann bekannte, berührungslos arbeitende Reflex-Ortungsvorrichtung, wie beispielsweise eine Laserreflexortungsvorrichtung, eine infrarotortungsvorrichtung oder eine Ultraschallortungsvorrichtung verwendet werden. Die Entfernung zwischen der Ortungsvorrichtung 51 und dem abgetastetem Bereich wird in an sich bekannter Weise mittels einer Laufzeitmessung zwischen dem gesendeten und empfangenen Radar, Schall- oder Lichtimpuls bestimmt.

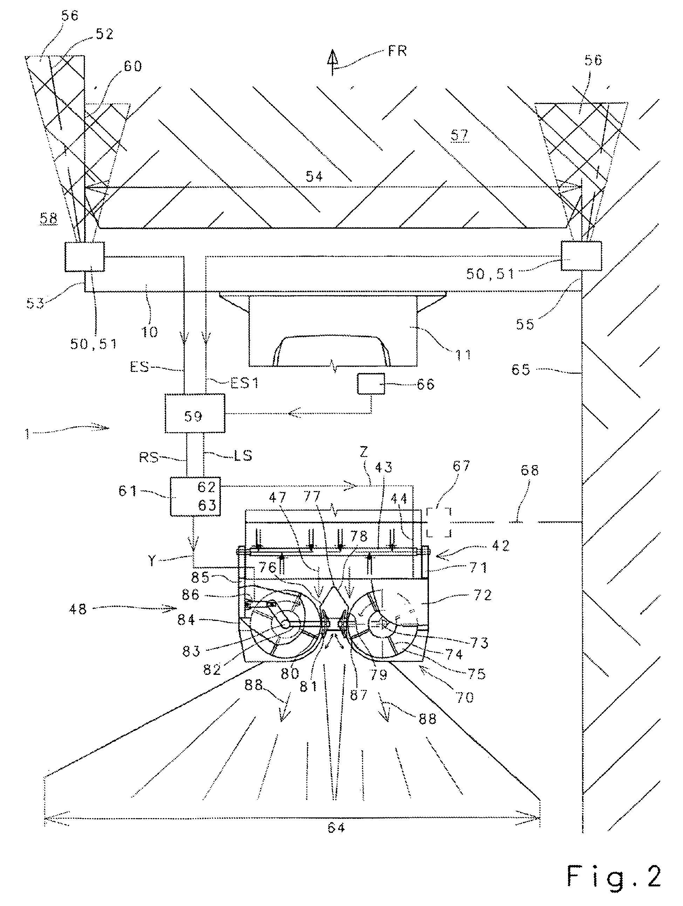

Fig.2 zeigt die schematische Draufsicht des in Fig.1 dargestellten Mähdreschers 1. Die Ortungsvorrichtung 51 ist an der in Fahrtrichtung des Mähdreschers 1 gesehen linken Schneidwerkswand 53 des Schneidwerks 10 angeordnet, wobei die linke Schneidwerkswand 53 die Schnittbreite 54 des Schneidwerks 10 linksseitig begrenzt. Die Ortungsvorrichtung 51 kann wahlweise auch auf die rechte Schneidwerkswand 55 des Schneidwerks 10 umgebaut werden, welche die Schnittbreite 54 des Schneidwerks 10 rechtsseitig begrenzt.
Der Abtaststrahl 52 wird innerhalb eines Abtastbereichs 56 quer zur Fahrtrichtung FR des Mähdreschers 1 verschwenkt und tastet dabei eine Kontur des vor dem Schneidwerk 10 liegenden Bestandes 57 und des vor dem Schneidwerk 10 liegenden abgeernteten Feldes 58 ab. Die Ortungseinrichtung 51 generiert abhängig von den ermittelten Entfernungen Entfernungssignale ES, die an eine mit der jeweiligen Ortungsvorrichtung 51 verbundenen Auswerteeinheit 59 übermittelt werden. Die Auswerteeinheit 59 erkennt dabei beispielsweise anhand eines Entfernungssprungs oder Extremwerten der ausgewerteten Entfernungssignale ES eine Bestandskante 60. Gleichzeitig ermittelt die Auswerteeinheit 59 mit den Entfernungssignalen ES, ob der Bestand 57 in Fahrtrichtung FR des Mähdreschers 1 gesehen linksseitig oder rechtsseitig von der Bestandskante 60 angeordnet ist und generiert ein Rechtssignal RS, wenn der Bestand 57 rechtsseitig von der Bestandskante 60 angeordnet ist. Die Auswerteeinheit 59 ist mit einer Steuereinheit 61 verbunden, an die die Auswerteeinheit 59 das Rechtssignal RS übermittelt.
In der Steuereinheit 61 ist für das Rechtssignal RS ein erster Verstellbereich 62 für die Regelung der Verteilbreite 64 des Häckseigutverteilers 48 gespeichert. Abhängig vom Verstellbereich 62 werden entsprechende Steuerbefehle Y, Z an die an späterer Stelle noch näher erläuterte Verteileinrichtung 48 übermittelt, so dass die Regelung der Verteilbreite 64 erfindurigsgemäß abhängig von den von der Ortungsvorrichtung 51 generierten Entfernungssignalen ES erfolgt und die Verteilbreite 64 rechtsseitig verringert wird, um den Abstand zu der beim Ernten neu entstehenden Bestandskante 65 zu vergrößern. Erkennt die Ortungsvorrichtung 51 keine Erntegutkante 60, was beispielsweise bei der ersten Durchfahrt durch den Bestand vorkommt, so wird die Verteilbreite 64 beidseitig verringert, damit die Spreu weder in den links noch in den rechts vom Mähdrescher 1 stehenden Bestand geworfen wird.
Die Ortungsvorrichtung 51 kann wahlweise auch auf die rechte Schneidwerkwand 55 des Schneidwerks 10 umgebaut werden, welche die Schnittbreite des Schneidwerks 54 rechtsseitig begrenzt. In diesem Fall generiert die Auswerteeinheit 59 ein Linkssignal LS, wenn sie eine Bestandskante 60 erkennt und der Bestand 57 linksseitig der Bestandkante 60 angeordnet ist. Für die Linkssignale LS ist in der Steuereinheit 61 ein zweiter Verstellbereich 63 zur Steuerung der Verteilbreite 64 gespeichert. Die wechselweise Anbringung der Ortungsvorrichtung 51 entweder an der linken Schneidwerkswand 53 oder der linken Schneidwerkwand 55 erfordert, dass die landwirtschaftliche Arbeitsmaschine so durch den Bestand 57 fährt, dass die Bestandskante 60 stets im Abtastbereich 56 der Ortungsvorrichtung 51 liegt. Dies erfordert, dass der Mähdrescher stets in Abhängigkeit von der Lage der Ortungsvorrichtung 51 am Schneidwerk 10 in den Bestand fahren muss.
Um das Einfahren des Mähdreschers 1 von der Lage der Ortungsvorrichtung 51 zu entkoppeln, ist es denkbar, dass sowohl an der linken Schneidwerkswand 53 als auch an der rechten Schneidwerkswand 55 eine Ortungsvorrichtung 51 an dem Schneidwerk 10 angebracht ist. Die Ortungsvorfichtungen 51 generieren abhängig von der Entfernungen der jeweiligen Ortungsvorrichtung 51 zum Bestand 57 beziehungsweise zum abgeerntetem Feld 58 Entfernungssignale ES, ES1. Beide Ortungsvorrichtungen 51 sind mit der Auswerteeinheit 59 verbunden, an die die Entfernurigssignate ES, ES1 übermittelt werden. Sobald die Auswerteeinheit 59 ermittelt, dass die auf der linken Schneidwerkswand 53 angeordnete Ortungsvorrichtung 51 eine Bestandskante 60 und die auf der Schneidwerkswand 55 angeordnete Ortungsvorrichtung 51 keine Bestandskante sensiert, generiert die Auswerteeinheit 59 ein Linkssignal LS und sobald die Auswerteeinheit 59 ermittelt, dass die auf der rechten Schneidwerkswand 55 angeordnete Ortungsvorrtchtung 51 eine Bestandskante sensiert und die auf der linken Schneidwerkswand 53 angeordnete Ortungsvorrichtung 51 keine Bestandskante 60 sensiert, generiert die Auswerteeinheit 59 ein Rechtssignal RS. Dies erfolgt vor dem Hintergrund, dass wenn die linke Ortungsvorrichtung 51 beim Ernten eine Bestandkante 60 sensiert, der Bestand 57 üblicherweise rechtsseitig der Bestandskante 60 angeordnet ist und dass wenn die rechte Ortungsvorrichtung 51 beim Ernten eine Bestandkante sensiert, der Bestand 57 üblicherweise linksseitig der Bestandskante angeordnet ist.
Sensieren beide Ortungsvorrichtung 51 jeweils eine Bestandskante 60 oder sensieren beide Ortungsvorrichtung keine Bestandskanten, generiert die Auswerteeinheit sowohl ein Rechtssignal R und ein Linkssignal L, so dass die Verteilbreite 64 beidseitig reduziert wird,
Es ist denkbar, dass die Auswerteeinheit 59 mit einem Bedienelement 66 verbunden ist, wobei ein Bediener über das Bedienelement 66 auswählen kann, ob die Entfernungssignale ES der auf der linken Schneidwerkswand 53 angeordneten Ortungsvorrichtung 51 oder die Entfernungssignale ES1 der auf der rechten Schneidwerkswand 55 angeordneten Ortungsvorrichtung 51 zur Steuerung der Verteilbreite 64 des Häckselgutverteilers 48 herangezogen werden sollen.
Ebenso ist es denkbar, eine Ortungsvorrichtung 67 so am Mähdrescher anzuordnen, dass deren Abtaststrahl 68 auf den Bestand 57 in Fahrtrichtung FR rechts neben dem Mähdrescher gerichtet ist. Erkennt die Ortungsvorrichtung 67 eine Erntegutkante 65, so wird die Verteilbreite 64 rechtsseitig reduziert, erkennt die Ortungsvorrichtung 67 keine Erntegutkante, so wird die Verteilbreite 64 linksseitig reduziert. Die Abtaststrahl 68 der Ortungsvorrichtung 67 kann auch auf den Bestand in Fahrtrichtung FR links neben den Mähdrescher 1 gerichtet sein. Entsprechend wird die Verteilbreite 64 linksseitig reduziert, wenn die Ortungsvorrichtung 67 eine Erntegutkante erkennt und rechtsseitig reduziert, wenn die Ortungsvorrichtung 67 keine Erntegutkante erkennt.
Ebenso ist vorstellbar, die Entfernungssignale einer die Bestand kante 60 vor dem Schneidwerk 10 sensierenden Ortungsvorrichtung 51 und einer die bei der Erntefahrt entstehende Bestandskante 65 sensierenden Ortungsvorrichtung 67 zur Regelung der Verteilbreite 64 kombiniert zu nutzen.

Die im hinteren Bereich des Mähdreschers 1 angeordnete Verteileinrichtung 48 besteht aus zwei Wurfgebläsen 70, die auf einem Rahmen 71 der außerhalb eines Häckslergehäuses 44 auf der Häckslerwelle 43 gelagert ist. Mit dem Rahmen 71 ist ein nach hinten auskragendes Abdeckblech 72 (teilweise dargestellt) verbunden, in dem die Rotationsachsen 73 gelagert sind, Die Rotationsachsen 73 sind mit flexiblen Wurfschaufeln 74 besetzt, die unterseitig von einer mitrotierenden Scheibe 75 begrenzt werden, Zwischen den beiden aus dem oberen Abdeckblech 72, den rotierenden Achsen 73, den Wurfschaufeln 74 und den Scheiben 75 gebildeten Wurfgebläsen 70 ist ein V-förmiges Guttrennblech 76 angeordnet, dessen Spitze 77 gegen den von dem Strohhäcksler 42 kommenden Gutstrom 47 gerichtet ist, um diesen aufzuteilen. Die beiden Schenkel 78 des Guttrennblechs 76 schließen einen Raum zwischen sich ein und bilden starre Teilummantelungen 79 für die Wurfgebläse 70. An diese starren Teilummantelungen 79 schließen sich bewegliche Teilummantelungen 80 an, die aus einem weiteren Wandungsteil 81 bestehen. Das Wandungsteil 81 ist an einem Winkelhebel 82 befestigt, der auf einem Zapfen 83 drehbar aufgesetzt ist. Letzterer ist mit einer Quertraverse 84 fest verbunden, die über seitliche Längsträger 85 an dem Rahmen 71 befestigt ist. An dem anderen Ende des Winkelhebels 82 ist ein Stellglied 86 angelenkt, das seinerseits gelenkig mit dem Längsträger 85 verbunden ist und die bewegliche Teilummantelung 80 antreibt. Beide über die Stellglieder 86 angetriebenen Teilummantelungen 80 bilden jeweils eine in Rotationsrichtung laufende Abrisskante 87 einer Auslassöffnung des Wurfgebläses 70. Der aus dem Wurfgebläse 70 austretende Gutstrom 88 wird durch die Abrisskanten 87 beim Austreten aus dem Wurfgebläse 70 umgelenkt und verteilt. Die Stellglieder 86 der Teilummantelungen 80 sind mit der Steuereinheit 61 verbunden, die die von dem entsprechenden Verstellbereich 62, 63 abhängigen Steuersignale Y, Z an die Stellglieder 86 übermittelt und dadurch die Anschläge für die Abrisskanten 87 definiert. Durch die Verstellbereiche 62, 63 wird die Verteilbreite 64 des Gutstromes 88 auf dem Feld derart vorgegeben, dass verhindern wird, dass der Gutstrom 88 in den Bestand 57 geworfen wird.

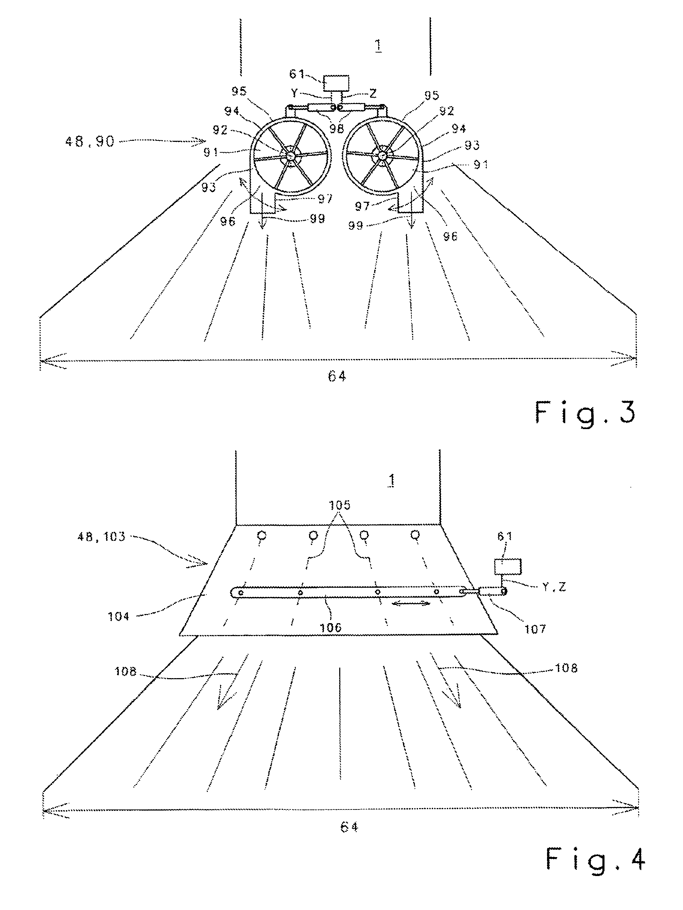

In Fig. 3 ist der hintere Bereich der Draufsicht auf einen Mähdrescher 1 mit einer als Radialgebläse 90 ausgeführten Verteileinrichtung 48 dargestellt, die dem Strohhäcksler (nicht dargestellt) nachgeordnet ist. Das Radialgebläse 90 besteht aus zwei nebeneinander angeordneten Rotoren 91 die in entgegengesetzten Richtungen um parallele Drehachsen 92 rotieren. Jeder Rotor 91 ist in einem Gehäuse 93 angeordnet, das einen unterseitigen Deckel 94 und eine den Umfang des jeweiligen Rotors 91 umgreifende Wandung 95 aufweist, wobei in der Wandung 95 eine Auslassöffnung 96 vorgesehen ist, an die sich radial ein Austragkanal 97 anschließt Die Gehäuse 93 sind jeweils mit einem Stellglied 98 um die Drehachse 92 des zugehörigen Rotors 91 oszillierend angetrieben, so dass die Position der Austragkanäle 97 sich kontinuierlich verändert. Die Stellglieder 98 sind mit der Steuereinheit 61 verbunden, die die von dem entsprechenden Verstellbereich 62, 63 abhängigen Steuersignale Y, Z an die Stellglieder 98 übermittelt und damit die Anschläge für die Austragkanäle 97 definiert, durch die die Verteilbreite 64 des aus dem Radialgebläse 90 austretenden Gutstroms 99 auf dem Feld vorgegeben wird,

In Fig.4 ist der hintere Bereich einer Draufsicht eines Mähdrescher 1 mit einer als Verteilhaube 103 ausgeführten Verteileinrichtung 48 dargestellt, die dem Strohhäcksler (nicht dargestellt) nachgeordnet ist. Unterhalb eines Abdeckblechs 104 sind mehrere Leitbleche 105 angeordnet, die an ihrem dem Strohhäcksler zugewandten Ende schwenkbar an dem Abdeckblech 104 gelagert sind. Die Leitbleche 105 sind über einen Koppelmechanismus 106 miteinander verbunden und werden über ein an dem Koppelmechanismus 106 angelenktes Stellglied 107 gemeinsam verschwenkt. Das Stellglied 107 ist mit der Steuereinheit 61 verbunden, die das von dem entsprechenden Verstellbereich 62, 63 abhängige Steuersignal Y, Z an das Stellglied 107 übermittelt und damit den Verschwenkwinkel der Leitbleche 105 definiert und damit die Verteilbreite 64 des aus der Verteilhaube 103 austretenden Gutstroms 108 auf dem Feld bestimmt.

Es liegt im Rahmen der Erfindung die Kantenerkennungseinrichtung 50 als Taster auszuführen, der bei der Berührung der Bestandkante 60, 65 ausgelenkt wird.

Es liegt im Rahmen des Könnens eines Fachmannes die beschriebenen Ausführutigsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

| | | | |
|---|---|---|---|
| 1 | Mähdrescher | 31 | Ährenförderschnecke |
| 2 | Dreschwerk | 32 | Ährenelevator |
| 3 | Schüttlerhorde | 33 | Auffang- und Führungsboden |
| 4 | Abscheideorgan | 34 | Kornförderschnecke |
| 5 | Reinigungseinrichtung | 35 | Kornelevator |
| 6 | Obersieb | 36 | Korntank |
| 7 | Untersieb | 37 | Spreu |
| 8 | Reinigungsgebläse | 38 | Siebüberlauf |
| 9 | Erntegut | 39 | Spreuverteiler |
| 10 | Schneidwerk | 40 | Stroh |
| 11 | Schrägförderer | 41 | Verlustkörner |
| 12 | Maschinengehäuse | 42 | Strohhäcksler |
| 13 | Kom-Spreu-Gemisch | 43 | Häckslerwelle |
| 14 | Dresch- und Abscheidekorb | 44 | Häckslergehäuse |
| 15 | Vorbereitungsboden | 45 | Messer |
| 16 | Körner | 46 | Gegenmesser |
| 17 | Halmteile | 47 | Häckselgutstrom |
| 18 | Spreuteile | 48 | Verteileinrichtung |
| 19 | Wendetrommel | 50 | Kantenerkennungseinrichtung |
| 20 | Gutstrom | 51 | Ortungsvorrichtung |
| 21 | Sieböffnung | 52 | Abtaststrahl |
| 22 | Rücklaufboden | 53 | Schneidwerkswand |
| 23 | Sieböffnung | 54 | Schnittbreite |
| 24 | Sieböffnung | 55 | Schneidwerkswand |
| 25 | Erntegut | 56 | Abtastbereich |
| 26 | Siebdurchgang | 57 | Bestand |
| 27 | Überkehrbereich | 58 | Abgeerntetes Feld |
| 28 | Siebüberlauf | 59 | Auswerteeinheit |
| 29 | Üherkehrerntegutmenge | 60 | Bestandskante |
| 30 | Auffangboden | 61 | Steuereinheit |
| 62 | Erster Verstellbereich | 95 | Wandung |
| 63 | Zweiter Verstellbreich | 96 | Auslassöffnung |
| 64 | Verteilbreite | 97 | Austragkanal |
| 66 | Bedienelement | 98 | Stellglied |
| 67 | Ortungsvorrichtung | 99 | Gutstrom |
| 68 | Abtaststrahl | 103 | Verteilhaube |
| 69 | Bestand | 104 | Abdeckblech |
| 70 | Wurfgebläse | 105 | Leitblech |
| 71 | Rahmen | 106 | Koppelmechanismus |
| 72 | Abdeckblech | 107 | Stellglied |
| 73 | Rotationsachse | 108 | Gutstrom |
| 74 | Wurfschaufel | | |
| 75 | Scheibe | | |
| 76 | Guttrennblech | | |
| 77 | Spitze | | |
| 78 | Schenkel | | |
| 79 | starre Teilummantelungen | | |
| 80 | bewegliche Teilummantelungen | | |
| 81 | Wandungsteil | | |
| 82 | Winkelhebel | | |
| 83 | Zapfen | | |
| 84 | Quertraverse | | |
| 85 | Längsträger | | |
| 86 | Stellglied | | |
| 87 | Abrisskante | | |
| 88 | Gutstrom | | |
| 90 | Radialgebläse | | |
| 91 | Rotor | | |
| 92 | Drehachse | | |
| 93 | Gehäuse | | |
| 94 | Deckel | | |

## Patentansprüche

1. Erntemaschine mit einer Verteileinrichtung für einen aus der Erntemaschine austretenden Gutstrom, wobei die Verteileinrichtung verstellbare Gutleitelemente zur Regelung der Verteilbreite des Gutstroms aufweist und wobei die Erntemaschine eine Kantenerkennungseinrichtung aufweist, die abhängig von der Lage eines Bestandes und/oder eines abgeernteten Feldstücks zur Erntemaschine Entfernungssignale generiert,
**dadurch gekennzeichnet,**
**dass** die Regelung der Verteilbreite (64) der Verteileinrichtung (48) abhängig von den Entfernungssignalen (ES, ES1) der Kantenerkennungseinrichtung (50, 51, 67) erfolgt.

2. Erntemaschine nach Anspruch 1,
**dadurch gekennzeichnet,**
**dass** die Kantenerkennungseinrichtung (50) eine Ortungsvorrichtung (51, 67) ist, die eine Bestandskante (60, 65) auf dem Feld berührungslos delektiert.

3. Erntemaschine nach wenigstens einem der vorhergehenden Ansprüche,
**dadurch gekennzeichnet,**
**dass** die Ortungsvorrichtung (51, 67) mit einer Auswerteeinheit (59) verbunden ist, wobei die Entfervungssignale (ES, ES1) an die Auswerteeinheit (59) übermittelt werden.

4. Erntemaschine nach wenigstens einem der vorhergehenden Ansprüche,
**dadurch gekennzeichnet,**
**dass** die Auswerteeinheit (59) mit den Entfernungssignalen (ES, ES1) ermittelt, ob der Bestand (57) linksseitig oder rechtsseitig von der Bestandskante (60) angeordnet ist und ein Linkssignal (LS) generiert, wenn der Bestand (57) linksseitig der Bestandkante (60) angeordnet ist und/oder ein Rechtssignal (RS) generiert, wenn der Bestand (57) rechtsseitig von der Bestandskante (60) angeordnet ist.

5. Erntemaschine nach wenigstens einem der vorhergehenden Ansprüche,
**dadurch gekennzeichnet,**
**dass** die Auswerteeinheit (59) mit einer Steuereinheit (61) verbunden ist und die Auswerteeinheit (59) das Linkssignal (LS) und/oder das Rechtssignal (RS) an die Steuereinheit (61) übermittelt.

6. Erntemaschine nach wenigstens einem der vorhergehenden Ansprüche,
**dadurch gekennzeichnet,**
**dass** in der Steuereinheit (61) ein erster Verstellbereich (62) zur Regelung der Verteilbreite (64) und ein zweiter Verstellbereich (63) zur Regelung der Verteilbreite (64) gespeichert sind und die Steuereinheit (61) abhängig vom Linkssignal (LS) den ersten Verstellbereich (62) festlegt und/oder abhängig vom Rechtssignal (RS) den zweiten Verstellbereich (63) festlegt.

7. Erntemaschine nach wenigstens einem der vorhergehenden Ansprüche,
**dadurch gekennzeichnet,**
**dass** die Steuereinheit (61) in Abhängigkeit vom festgelegten Verstellbereich (62, 63) Steuersignale (Y, Z) generiert, wobei mit den Steuersignalen (Y, Z) die Festlegung der Anschläge oder der Schwenkwinkel der Gutleitelemente (80, 97, 105) erfolgt.

8. Erntemaschine nach wenigstens einem der vorhergehenden Ansprüche,
**dadurch gekennzeichnet,**
**dass** die Erntemaschine ein Mähdrescher (1) ist und die Verteileinrichtung (48) ein Spreu- und/oder Häckselgutverteiler ist.

9. Erntemaschine nach wenigstens einem der vorhergehenden Ansprüche,
**dadurch gekennzeichnet,**
**dass** die Verteileinrichtung (48) eine Verteilhaube (103) mit zumindest einem verschwenkbaren Leitblech (105) ist, wobei das von der Steuereinheit (61) generierte Steuersignal (Y, Z) den Verschwenkwinkel des Leitblechs (105) begrenzt.

10. Erntemaschine nach wenigstens einem der vorhergehenden Ansprüche,
**dadurch gekennzeichnet,**
**dass** die Verteileinrichtung (48) wenigstens ein Wurfgebläse (70) mit einer verschwenkbaren Abrisskante (87) aufweist, wobei das von der Steuereinheit (61) generierte Steuersignal (Y, Z) die Anschläge der Abrisskante (87) begrenzt.

11. Erntemaschine nach wenigstens einem der vorhergehenden Ansprüche,
**dadurch gekennzeichnet,**
**dass** die Verteileinrichtung (48) ein Radialgebläse (90) mit wenigstens einem oszillierenden Austragkanal (97) ist, wobei das von der Steuereinheit (61) generierte Steuersignal (Y, Z) die Anschläge des Austragkanals (97) begrenzt.

12. Erntemaschine nach wenigstens einem der vorhergehenden Ansprüche,
**dadurch gekennzeichnet,**
**dass** die Erntemaschine wenigstens zwei Ortungsvorrichtungen (51) aufweist, die jeweils Entfernungssignale (ES, ES1) generieren.

13. Erntemaschine nach wenigstens einem der vorhergehenden Ansprüche,
**dadurch gekennzeichnet,**
**dass** die Ortungsvorrichtungen (51) mit der Auswerteeinheit (59) verbunden sind, und die Ortungsvorrichtungen (51) die Entfernungssignale (ES, ES1) an die Steuereinheit (59) übermitteln.

14. Erntemaschine nach wenigstens einem der vorhergehenden Ansprüche,
**dadurch gekennzeichnet,**
**dass** die Auswerteeinheit (59) mit einem Bedienelement (66) verbunden ist, über das ein Bediener auswählt, mit weiche Entfernungssignale (ES, ES1) der Verstellbereich (62, 63) des Gutleitelements festgelegt wird.

15. Erntemaschine nach wenigstens einem der vorhergehenden Ansprüche,
**dadurch gekennzeichnet,**
**dass** die Ortungsvorrichtung (51, 67) von einer Reflex-Ortungsvorrichtung gebildet wird.

16. Erntemaschine nach wenigstens einem der vorhergehenden Ansprüche,
**dadurch gekennzeichnet,**
**dass** die Reflex-Ortungsvorrichtung Laser-, Ultraschall- oder Infrarot-basiert arbeitet.

17. Erntemaschine nach wenigstens einem der vorhergehenden Ansprüche,
**dadurch gekennzeichnet,**
**dass** die Kantenerkennungseinrichtung (50) ein Taster ist, der bei Berührung mit der Bestandskante (60, 65) ausgelenkt wird.

## Claims

1. A harvester comprising a distributing device for a flow of material issuing from the harvester, wherein the distributing device has displaceable material guide elements for regulating the distribution width of the flow of material and wherein the harvester has an edge recognition device which generates distance signals in dependence on the position of a crop stand and/or a piece of field being harvested relative to the harvester,
**characterised in that** regulation of the distribution width (64) of the distributing device (48) is effected in dependence on the distance signals (ES, ES1) from the edge recognition device (50, 51, 67).

2. A harvester according to claim 1 **characterised in that** the edge recognition device (50) is a locating device (51, 67) which contactlessly detects a crop stand edge (60, 65) on the field.

3. A harvester according to at least one of the preceding claims **characterised in that** the locating device (51, 67) is connected to an evaluation unit (59), the distance signals (ES, ES 1) being communicated to the evaluation unit (59).

4. A harvester according to at least one of the preceding claims **characterised in that** the evaluation unit (59) with the distance signals (ES, ES1) ascertains whether the crop stand (57) is arranged on the left side or the right side from the crop stand edge (60) and generates a left signal (LS) when the crop stand (57) is arranged on the left side of the crop stand edge (60) and/or generates a right signal (RS) when the crop stand (57) is arranged on the right side of the crop stand edge (60).

5. A harvester according to at least one of the preceding claims **characterised in that** the evaluation unit (59) is connected to a control unit (61) and the evaluation unit (59) communicates the left signal (LS) and/or the right signal (RS) to the control unit (61).

6. A harvester according to at least one of the preceding claims **characterised in that** a first displacement range (62) for regulating the distribution width (64) and a second displacement range (63) for regulating the distribution width (64) are stored in the control unit (61) and the control unit (61) establishes the first displacement range (62) in dependence on the left signal (LS) and/or establishes the second displacement range (63) in dependence on the right signal (RS).

7. A harvester according to at least one of the preceding claims **characterised in that** the control unit (61) generates control signals (Y, Z) in dependence on the established displacement range (62, 63), wherein establishment of the abutments or the pivotal angles of the material guide elements (80, 97, 105) is effected with the control signals (Y, Z).

8. A harvester according to at least one of the preceding claims **characterised in that** the harvester is a combine harvester (1) and the distributing device (48) is a chaff and/or chopped straw material distributor.

9. A harvester according to at least one of the preceding claims **characterised in that** the distributing device (48) is a distributing hood (103) having at least one pivotable guide plate (105), the control signal (Y, Z) generated by the control unit (61) defining the pivotal angle of the guide plate (105).

10. A harvester according to at least one of the preceding claims **characterised in that** the distributing device (48) has at least one projection blower (70) with a pivotable break-away edge (87), the control signal (Y, Z) generated by the control unit (61) defining the abutments of the break-away edge (87).

11. A harvester according to at least one of the preceding claims **characterised in that** the distributing device (48) is a radial blower (90) having at least one oscillating discharge passage (97), the control signal (Y, Z) generated by the control unit (61) defining the abutments of the discharge passage (97).

12. A harvester according to at least one of the preceding claims **characterised in that** the harvester has at least two locating devices (51) respectively generating distance signals (ES, ES1).

13. A harvester according to at least one of the preceding claims **characterised in that** the locating devices (51) are connected to the evaluation unit (59) and the locating devices (51) communicate the distance signals (ES, ES1) to the control unit (59).

14. A harvester according to at least one of the preceding claims **characterised in that** the evaluation unit (59) is connected to an operating element (66) by way of which an operator selects the distance signals (ES, ES1) with which the displacement range (62, 63) of the material guide element is established.

15. A harvester according to at least one of the preceding claims **characterised in that** the locating device (51, 67) is formed by a reflection locating device.

16. A harvester according to at least one of the preceding claims **characterised in that** the reflection locating device operates on a laser, ultrasound or infrared basis.

17. A harvester according to at least one of the preceding claims **characterised in that** the edge recognition device (50) is a feeler which is deflected upon contact with the crop stand edge (60, 65).

## Revendications

1. Machine de récolte pourvue d'un dispositif d'éparpillage pour un flux de produit sortant de la machine de récolte, le dispositif d'éparpillage comportant des éléments de guidage de produit réglables pour régler la largeur d'éparpillage du flux de produit, et la machine de récolte comportant un dispositif de détection de bord qui génère des signaux de distance en fonction de la position d'une récolte et/ou d'un champ récolté par rapport à la machine de récolte, **caractérisée en ce que** le réglage de la largeur d'éparpillage (64) du dispositif d'éparpillage (48) est effectué en fonction des signaux de distance (ES, ES1) du dispositif de détection de bord (50, 51, 67).

2. Machine de récolte selon la revendication 1, **caractérisée en ce que** le dispositif de détection de bord (50) est un dispositif de localisation (51, 67) qui détecte sans contact un bord de récolte (60, 65) sur le champ.

3. Machine de récolte selon au moins l'une des revendications précédentes, **caractérisée en ce que** le dispositif de localisation (51, 67) est relié à une unité d'évaluation (59), les signaux de distance (ES, ES1) étant transmis à l'unité d'évaluation (59).

4. Machine de récolte selon au moins l'une des revendications précédentes, **caractérisée en ce que** l'unité d'évaluation (59) détermine à l'aide des signaux de distance (ES, ES1) si la récolte (57) se trouve à gauche ou à droite du bord de récolte (60) et génère un signal « gauche » (LS) quand la récolte (57) est disposée à gauche du bord de récolte (60) et un signal « droite » (RS) quand la récolte (57) est disposée à droite du bord de récolte (60).

5. Machine de récolte selon au moins l'une des revendications précédentes, **caractérisée en ce que** l'unité d'évaluation (59) est reliée à une unité de commande (61), et l'unité d'évaluation (59) transmet le signal gauche (LS) et/ou le signal droite (RS) à l'unité de commande (61).

6. Machine de récolte selon au moins l'une des revendications précédentes, **caractérisée en ce qu'**une première plage de réglage (62) pour régler la largeur d'éparpillage (64) et une deuxième plage de réglage (63) pour régler la largeur d'éparpillage (64) sont stockées dans l'unité de commande (61), et **en ce que** l'unité de commande (61) définit la première plage de réglage (62) en fonction du signal gauche (LS) et/ou la deuxième plage de réglage (63) en fonction du signal droite (RS).

7. Machine de récolte selon au moins l'une des revendications précédentes, **caractérisée en ce que** l'unité de commande (61) génère des signaux de commande (Y, Z) en fonction de la plage de réglage (62, 63) définie, les butées ou l'angle de pivotement des éléments de guidage de produit (80, 97, 105) étant définis par les signaux de commande (Y, Z).

8. Machine de récolte selon au moins l'une des revendications précédentes, **caractérisée en ce que** la machine de récolte est une moissonneuse-batteuse (1) et le dispositif d'éparpillage (48) est un éparpilleur de balle et/ou de matière broyée.

9. Machine de récolte selon au moins l'une des revendications précédentes, **caractérisée en ce que** le dispositif d'éparpillage (48) est un capot éparpilleur (103) comportant au moins une tôle déflectrice pivotante (105), le signal de commande (Y, Z) généré par l'unité de commande (61) limitant l'angle de pivotement de la tôle déflectrice (105).

10. Machine de récolte selon au moins l'une des revendications précédentes, **caractérisée en ce que** le dispositif d'éparpillage (48) comporte au moins une soufflante d'éjection (70) avec un bord de fuite pivotant (87), le signal de commande (Y, Z) généré par l'unité de commande (61) limitant les butées du bord de fuite (87).

11. Machine de récolte selon au moins l'une des revendications précédentes, **caractérisée en ce que** le dispositif d'éparpillage (48) est une soufflante radiale (90) avec au moins un canal de décharge oscillant (97), le signal de commande (Y, Z) généré par l'unité de commande (61) limitant les butées du canal de décharge (97).

12. Machine de récolte selon au moins l'une des revendications précédentes, **caractérisée en ce que** la machine de récolte comporte au moins deux dispositifs de localisation (51) qui génèrent chacun des signaux de distance (ES, ES1).

13. Machine de récolte selon au moins l'une des revendications précédentes **caractérisée en ce que** les dispositifs de localisation (51) sont reliés à l'unité d'évaluation (59), et les dispositifs de localisation (51) transmettent les signaux de distance (ES, ES1) à l'unité de commande (59).

14. Machine de récolte selon au moins l'une des revendications précédentes, **caractérisée en ce que** l'unité d'évaluation (59) est reliée à un élément de commande (66) au moyen duquel un opérateur sélectionne avec quels signaux de distance (ES, ES1) est définie la plage de réglage (62, 63) de l'élément de guidage de produit.

15. Machine de récolte selon au moins l'une des revendications précédentes, **caractérisée en ce que** le dispositif de localisation (51, 67) est formé par un dispositif de localisation à réflexion.

16. Machine de récolte selon au moins l'une des revendications précédentes, **caractérisée en ce que** le dispositif de localisation à réflexion fonctionne par laser, ultrasons ou infrarouges.

17. Machine de récolte selon au moins l'une des revendications précédentes, **caractérisée en ce que** le dispositif de détection de bord (50) est un palpeur qui est dévié lors du contact avec le bord de récolte (60, 65).
